(19) Europäisches Patentamt
European Patent Office
Office européen des brevets

(11) EP 2 837 491 B1

(12) **EUROPEAN PATENT SPECIFICATION**

(45) Date of publication and mention of the grant of the patent:
**04.11.2015 Bulletin 2015/45**

(21) Application number: **13775151.7**

(22) Date of filing: **27.03.2013**

(51) Int Cl.:
***B29C 65/02*** *(2006.01)* ***B32B 15/08*** *(2006.01)*

(86) International application number:
**PCT/JP2013/059040**

(87) International publication number:
**WO 2013/153951 (17.10.2013 Gazette 2013/42)**

(54) **METHOD FOR PRODUCING BONDED MEMBER, AND BONDED MEMBER**

VERFAHREN ZUR HERSTELLUNG EINES GEBONDETEN ELEMENTS UND GEBONDETES ELEMENT

PROCÉDÉ DE PRODUCTION D'ÉLÉMENT ASSEMBLÉ ET ÉLÉMENT ASSEMBLÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.04.2012 JP 2012088623**

(43) Date of publication of application:
**18.02.2015 Bulletin 2015/08**

(73) Proprietor: **Teijin Limited**
**Osaka-shi, Osaka 541-0054 (JP)**

(72) Inventors:
- **TAKEUCHI Masaki**
  **Osaka-shi, Osaka 541-0054 (JP)**
- **KOIKE, Shuji**
  **Osaka-shi, Osaka 541-0054 (JP)**
- **HIRATA, Masumi**
  **Osaka-shi, Osaka 541-0054 (JP)**
- **KATO, Takumi**
  **Osaka-shi, Osaka 541-0054 (JP)**
- **SANO, Hiroki**
  **Osaka-shi, Osaka 541-0054 (JP)**

(74) Representative: **Carpmaels & Ransford LLP**
**One Southampton Row**
**London WC1B 5HA (GB)**

(56) References cited:
**EP-A1- 1 717 345**
**WO-A1-2009/078382**
**WO-A1-2012/074083**
**JP-A- 2006 297 927**
**JP-A- 2006 305 838**
**JP-B2- H0 551 671**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 837 491 B1

## Description

Technical Field

The present invention relates to a method for manufacturing a joint member of a carbon fiber composite material and a metal, and a joint member.

Background Art

A carbon fiber composite material has high specific strength and specific rigidity and is valued as an extremely excellent material. Conventionally, in joining a carbon fiber composite material including a thermosetting resin as a matrix to a different kind of a member, particularly a metal, there have been employed a mechanical joining using a bolt and a nut, a rivet or the like or a joining using an adhesive.

The mechanical joining by a bolt and a nut or the like generally involves an increase in weight and also particularly, there is a concern that, in a composite material, stress concentrates in a joining point, and in the worst case, fracture continuously proceeds starting from the first stress concentrated point.

In the joining using an adhesive, it is generally necessary to secure an adhesive layer having a certain thickness in order to secure strength. Particularly, in a case of joining a large-sized member, a considerably amount of the adhesive is required. As a result, there is a concern for a great increase in weight of a resulting member. Furthermore, there is a problem that joining strength thereof is not always sufficient with only the adhesive. Additionally, since much time is generally required to attain practical joining strength, an aging step must be taken into consideration.

On the other hand, in a carbon fiber composite material including a thermoplastic resin as a matrix (hereinafter sometimes referred to as a "thermoplastic carbon fiber composite material" or simply a "thermoplastic composite material"), materials are joined to each other by welding in a range where the resin is compatible, and joining strength comparable to the matrix resin can be expected. However, there are many cases that the joining to a metal by welding is difficult even in the case of the thermoplastic carbon fiber composite material.

To weld the thermoplastic carbon fiber composite material to a metal, it is required that the thermoplastic resin itself used as a matrix can weld to the metal.

Patent Document 1 describes that a metal and a resin are joined by welding. Specifically, there is described that the joining can be achieved due to an anchor effect by injection-molding a resin to an aluminum material whose surface is made finely porous.

Moreover, Patent Documents 2, 3, 4, and 5 describe that a resin and a metal are joined by applying a certain treatment to a metal surface.

Furthermore, with regard to a carbon fiber composite material (thermosetting carbon fiber composite material) containing a thermosetting resin as a matrix, Patent Document 6 describes a joining method with arranging an intermediate resin layer having an affinity with both a metal and the composite material.

Citation List

Patent Documents

Patent Document 1: JP-A-2003-103563
Patent Document 2: JP-B-5-51671
Patent Document 3: WO 2009/078382
Patent Document 4: JP-A-2006-305838
Patent Document 5: JP-A-2001-1445
Patent Document 6: JP-A-2006-297927

Summary of the Invention

Problems that the Invention is to Solve

The advantage of a thermoplastic carbon fiber composite material is that its shape easily changes when heat is applied. Therefore, injection- or press-molding can be conducted within an extremely short period of time as compared with a thermosetting carbon fiber composite material. Accordingly, at the time of joining a thermoplastic carbon fiber composite material and a metal material, if a thermoplastic resin that is a matrix of the composite material can be utilized

for joining, it is considered that the joining of the carbon fiber composite material and the metal material can be extremely easily and extremely efficiently achieved by thermocompression bonding in a mold and also the molding of the joint member can be performed.

However, even when a thermoplastic carbon fiber composite material is tried to join to a metal by the joining methods of a thermoplastic resin and a metal as described in Patent Documents 2 to 5, in the thermoplastic carbon fiber composite material, the thermoplastic resin is in a state of "being impregnated into" a carbon fiber bundle. Therefore, the resin is not always homogeneously present on the surface of the material, and in some cases, a portion "deficient" in the resin is present, so that there has been a concern that sufficient joining strength is not developed and joining strength shows great variations.

Furthermore, the carbon fiber causes a so-called electrolytic corrosion to a metal. Therefore, when the carbon fiber comes into contact with a metal in a portion deficient in the resin, the contact causes the corrosion of the metal.

A main object of the present invention is to provide a method for manufacturing a joint member in which a carbon fiber composite material (thermoplastic carbon fiber composite material) containing a thermoplastic resin as a matrix and a metal are strongly joined.

Means for Solving the Problems

As a result of intensive investigations on the method for joining a thermoplastic carbon fiber composite material and a metal, the present inventors have found that the metal and the thermoplastic carbon fiber composite material can be joined strongly and stably by: providing a thermoplastic resin layer between the surface of the metal which is surface-treated with a solution containing a specific triazine thiol derivative and the thermoplastic carbon fiber composite material; heating and melting the thermoplastic resin layer; and preferably further compression-bonding the surface of the metal and the carbon fiber composite material, and thus have reached the present invention.

Namely, the present invention relates to:

a method for manufacturing a joint member in which a carbon fiber composite material containing a thermoplastic resin as a matrix and a metal are joined, the method comprising:

- a step (i) of treating a surface of the metal to be joined to the carbon fiber composite material with a solution containing a triazine thiol derivative represented by the following general formula (1);
- a step (ii) of providing a thermoplastic resin layer having a thickness of 5 μm to 5 mm between the surface of the metal treated with the solution containing the triazine thiol derivative and the carbon fiber composite material; and
- a step (iii) of melting the thermoplastic resin layer by heating to thereby combine the metal and the carbon fiber composite material into one-piece:

General formula (1)

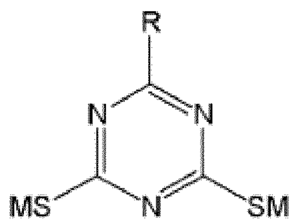

(wherein, in the general formula (1), R is -OR1, -OOR1, -SmR1, or NR1R2 where R1 and R2 are each independently H, a hydroxyl group, a carbonyl group, an ether group, an ester group, an amide group, an amino group, a phenyl group, an alkyl group having 1 to 10 carbon atoms, an alkynyl group having 2 to 10 carbon atoms, an alkenyl group, or a cycloalkyl group having 6 to 10 carbon atoms, and m means 1 or 2; M is H, Na, Li, K, Ba, Ca, or ammonium, and two M groups in the general formula (1) may be the same or different from each other).

Advantage of the Invention

According to the present invention, a thermoplastic carbon fiber composite material and a metal can be strongly and stably joined by a simplified method. Furthermore, since the carbon fiber composite material and the metal are

joined through a thermoplastic resin, electrolytic corrosion caused by carbon fibers can be simultaneously prevented. Additionally, by conducting the joining and molding simultaneously or continuously, a joint member of the thermoplastic carbon fiber composite material and the metal can be obtained for a short period of time in less number of steps. Furthermore, since the triazine thiol derivative used in the invention is relatively inexpensive and easily available, there is an advantage that the derivative can be industrially advantageously used.

Moreover, the joining and molding can be conducted simultaneously or continuously in the same mold. Therefore, when they are simultaneously performed, it becomes possible to manufacture a thermoplastic carbon fiber composite material-metal member joint body (also referred to as a "metal composite molded body") having a shape molded into a desired one in less number of steps for a short period of time.

Brief Description of the Drawings

Figure 1 is a schematic view (cross-sectional view) showing one embodiment of the joint member of the invention.

Embodiment of the Invention

The present invention relates to a method for manufacturing a joint member obtained by joining (adhering) a carbon fiber composite material containing a thermoplastic resin as a matrix and a metal. The method includes a step (i) of treating a surface of the metal with a solution containing a specific triazine thiol derivative, a step (ii) of providing a thermoplastic resin layer having a thickness of 5 $\mu$m to 5 mm between the surface of the metal treated with the solution containing the triazine thiol derivative and the carbon fiber composite material, and a step (iii) of melting the thermoplastic resin layer by heating to thereby strongly join the metal and the thermoplastic carbon fiber composite material, and preferably further includes a step (iv) of compression-bonding the thermoplastic resin layer and the thermoplastic composite material.

The following will describe embodiments of the invention.

[Thermoplastic Carbon Fiber Composite Material]

The thermoplastic carbon fiber composite material used in the invention is a composite material containing a thermoplastic resin as a matrix and containing carbon fibers in such a matrix. Here, the thermoplastic carbon fiber composite material preferably contains the thermoplastic resin in an amount of 50 to 1,000 parts by weight based on 100 parts by weight of the carbon fibers. More preferably, the content of the thermoplastic resin is from 50 to 400 parts by weight based on 100 parts by weight of the carbon fibers, and still more preferably, the content of the thermoplastic resin is from 50 to 100 parts by weight based on 100 parts by weight of the carbon fibers. When the amount of the thermoplastic resin as a matrix is 50 parts by weight or more based on 100 parts by weight of the carbon fibers, dry carbon fibers exposed from the matrix resin are less prone to increase, so that the case is preferred. Also, when the amount of the thermoplastic resin is less than 1,000 parts by weight based on 100 parts by weight of the carbon fibers, the carbon fibers are contained in an appropriate amount in the composite material and hence the composite material has suitable physical properties as a structural material.

(Thermoplastic Resin of Matrix)

Examples of the thermoplastic resin that is the matrix of the thermoplastic carbon fiber composite material include polyamide, polycarbonate, polyoxymethylene, polyphenylene sulfide, polyphenylene ether, modified polyphenylene ether, polyethylene terephthalate, polybutylene terephthalate, polyethylene naphthalate, polyethylene, polypropylene, polystyrene, polymethyl methacrylate, AS resin, and ABS resin. Particularly, in view of a balance between costs and physical properties, at least one selected from the group consisting of polyamide, polypropylene, polycarbonate and polyphenylene sulfide is preferred.

Moreover, as the polyamide (sometimes abbreviated as "PA", and sometimes called "nylon" as another name), preferred is at least one selected from the group consisting of PA6 (also called polycaproamide or polycaprolactam, and more accurately, poly $\varepsilon$-caprolactam), PA26 (polyethylene adipamide), PA46 (polytetramethylene adipamide), PA66 (polyhexamethylene adipamide), PA69 (polyhexamethylene azepamide), PA610 (polyhexamethylene sebacamide), PA611 (polyhexamethylene undecamide), PA612 (polyhexamethylene dodecamide), PA11 (polyundecane amide), PA12 (polydodecane amide), PA1212 (polydodecamethylene dodecamide), PA6T (polyhexamethylene terephthalamide), PA6I (polyhexamethylene isophthalamide), PA912 (polynonamethylene dodecamide), PA1012 (polydecamethylene dodecamide), PA9T (polynonamethylene terephthalamide), PA9I (polynonamethylene isophthalamide), PA10T (polydecamethylene terephthalamide), PA10I (polydecamethylene isophthalamide), PA11T (polyundecamethylene terephthalamide), PA11I (polyundecamethylene isophthalamide), PA12T (polydodecamethylene terephtalamide), PA12I

(polydodecamethylene isophthalamide), and polyamide MXD6 (polymetaxylene adipamide).

These thermoplastic resins may contain additives such as a stabilizing agent, a flame retardant, a pigment and a filler, according to the need.

(Carbon Fiber)

The form of the carbon fiber in the thermoplastic carbon fiber composite material is not particularly limited, and the carbon fibers can be a discontinuous (non-continuous) fiber or a continuous fiber. In the case of the continuous fiber, the carbon fibers may be in the form of a woven fabric, and may be a so-called "UD sheet" in which fibers are aligned in one direction. In the case of arranging fibers in one direction, the layers may be stacked in a multilayer by varying the fiber arrangement direction of each layer. For example, the layers can be alternately stacked in directions perpendicular to each other. Alternatively, stacking surfaces may be arranged symmetrically in a thickness direction.

In the case of using the discontinuous carbon fibers, such carbon fibers may be arranged so as to be dispersed and overlapped randomly in plane. As an average fiber length in this case, from the viewpoint of moldability in manufacturing a composite material having a desired shape, the length is preferably in the range of 3 to 100 mm, more preferably in the range of 5 to 100 mm, and further preferably in the range of 5 to 50 mm. When the average fiber length of the carbon fiber is 3 mm or more, particularly 5 mm or more, thermal shrinkage of the thermoplastic carbon fiber composite material after joining is small. When the average fiber length is 100 mm or less, the proportion of carbon fibers exposed to the surface of the thermoplastic carbon fiber composite material can be suppressed and contact area with a metal can be sufficiently secured, so that sufficient joining strength can be achieved. In this case, the carbon fibers may be present in the state of a carbon fiber bundle, in which a plurality of single fibers are bundled, in the composite material or only the single fibers may be present in a dispersed state but it is preferable that the states of the carbon fiber bundle and the single fibers are mixed. When discontinuous carbon fibers are oriented disorderly, i.e., two-dimensionally-randomly, in in-plane directions of the composite material, moldability as a sheet-like molded article and formability in the case of using a mold become good, so that the case is preferred.

In the invention, the thermoplastic carbon fiber composite material is substantially constituted by an isotropic random mat, in which discontinuous carbon fibers are two-dimensionally-randomly arranged, and a thermoplastic resin, and a ratio of a carbon fiber bundle (A) constituted by the carbon fibers of a critical number of single fiber or more, defined by the following formula (a) in the isotropic random mat to a total volume of fibers constituting the isotropic random mat is preferably 20 Vol(volume)% or more and less than 99 Vol%. Particularly preferred is one wherein the ratio is more preferably 30 Vol% or more and less than 90 Vol%, and further preferably 35 Vol% to 80 Vol%, and an average number (N) of single fibers (also referred to as "average number of fibers" in the carbon fiber bundle (A) satisfies the following formula (b):

$$\text{Critical number of single fiber} = 600/D \quad \text{(a)}$$

$$0.7*10^4/D^2 < N < 1*10^5/D^2 \quad \text{(b)}$$

wherein D is an average fiber diameter (μm) of carbon fiber.

Here, "substantially constituted by an isotropic random mat and a thermoplastic resin" means that the composite material may contain, for example, additives such as a stabilizing agent, a flame retardant, a pigment, a filler, a plasticizer, and a melt viscosity adjusting agent, according to the need (in a ratio of 20% by weight or less relative to the whole), in addition to the isotropic random mat and the thermoplastic resin.

The random mat constituting the thermoplastic carbon fiber composite material can be manufactured by, for example, methods described in WO2012/105080 and JP-A-2013-49208. For example, after a strand constituted by a plurality of carbon fibers is continuously slit along a fiber length direction to form a plurality of narrow strands having a width of 0.05 to 5 mm as needed, the narrows strands are continuously cut into strands having an average fiber length of 3 to 100 mm. Then, the cut chopped strands (carbon fiber bundles) are opened by blowing a gas thereto and, in that state, the opened bundles are deposited in a layer form on a breathable conveyor net or the like. Thereby, an isotropic random mat can be obtained. On this occasion, it is also possible to adopt a method of manufacturing a two-dimensional isotropic random mat containing a thermoplastic resin by depositing a particulate or short fiber-shaped thermoplastic resin on the breathable net conveyor together with carbon fibers or by supplying a molten thermoplastic resin in a film form to a mat-shaped carbon fiber layer to impregnate the resin into the carbon fiber layer.

The "two-dimensional isotropic random mat" used herein means a homogeneous mat in which discontinuous carbon fibers are oriented in a horizontal plane in random directions and lacks direction in the plane. An isotropic

thermoplastic carbon fiber composite material can be obtained by melting a thermoplastic resin and homogeneously impregnating the two-dimensional isotropic random mat with the molten thermoplastic resin.

In this method, by controlling conditions for opening the carbon fiber bundles, the carbon fiber bundles can be opened such that a carbon fiber bundle (A) in which the carbon fibers of the critical number of single fiber or more, defined by the above formula (a), are bundled, and a carbon fiber bundle (B1) including the carbon fibers less than the critical number of single fiber and/or a carbon single fiber (B2) are mixed. It is sufficient that the ratio of the carbon fiber bundle (A) to the total volume of carbon fibers in the random mat is controlled to 20 Vol% or more and less than 99 Vol%, preferably 30 Vol% or more and less than 90 Vol%, and further preferably 35 Vol% to 80 Vol%, and an average number (N) of fibers in the carbon fiber bundle (A) satisfies the above formula (b).

In the above method, it is also possible to form the isotropic random mat containing carbon fibers on a non-woven fabric by arranging a non-woven fabric constituted by a thermoplastic resin on a net conveyor, and moving the non-woven fabric along with the net conveyor.

The thermoplastic carbon fiber composite material prepared using the isotropic random mat containing a specific ratio of the fiber bundle in a state that a certain number of carbon fibers are bundled as above has particularly good joining property to a metal member to be described hereinafter. Although the reason is not yet clarified, it is presumed to be due to thermal shrinkage difference between the thermoplastic carbon fiber composite material and the metal, joining area, and the surface state of the composite material.

Each of the aforementioned random mat, a sheet prepared by paper-making of discontinuous fibers, a UD sheet in which continuous carbon fibers are aligned in one direction, and the like, is heated and pressurized in a state of containing the thermoplastic resin to melt the thermoplastic resin contained in the mat or sheet and impregnate the thermoplastic resin into spaces of the fibers, resulting in obtaining a thermoplastic carbon fiber composite material containing the thermoplastic resin as a matrix. The mat or sheet to be heated and pressurized may be a single layer or a layered body including a plurality of layers. The thermoplastic resin in this case may be supplied when manufacturing a sheet or mat of carbon fibers. Also, the thermoplastic resin may be a thermoplastic resin impregnated into the sheet or mat by layering a layer containing the thermoplastic resin and heating and pressurizing the layer after manufacturing the sheet or mat containing carbon fibers. Any thermoplastic carbon fiber composite material is not limited to a flat-plate shape, may be formed so as to have a cross-section of L-shape, T-shape, H-shape, U-shape and V-shape, and may have a curved surface.

As another method for manufacturing the thermoplastic carbon fiber composite material, by using long-fiber pellets, i.e., pellets obtained by steps of adjusting a molten resin to a given viscosity, impregnating continuous carbon fibers with the molten resin, and then cutting, the pellets can be molded into a predetermined shape by an injection molding machine.

The forms of the carbon fiber composite material may be one molded into a predetermined shape by an injection molding machine using the pellets or a composite material obtained by impregnating a UD sheet constituted by continuous fibers or a sheet obtained by wet paper-making of discontinuous fibers with a molten thermoplastic resin. In the invention, it is particularly preferred to use a composite material obtained by impregnating the aforementioned two-dimensional isotropic random mat with a molten thermoplastic resin.

The thermoplastic carbon fiber composite material referred to in the invention is not limited to a composite material in which reinforcing fibers are solely constituted by carbon fibers and includes a composite material in which a part of the carbon fibers, i.e., less than 50% by weight, preferably less than 30% by weight thereof is replaced with other reinforcing fibers. Therefore, it is possible to use a thermoplastic carbon fiber composite material which contains other reinforcing fibers such as aramide fibers or glass fibers instead of carbon fibers in the range of less than 50% by weight, preferably less than 30% of all reinforcing fibers contained in the composite material.

[Metal]

As the metal used for manufacturing the joint member by joining to the thermoplastic composite material in the invention, there may be specifically mentioned metals such as iron, stainless steel, aluminum, copper, brass, nickel and zinc, and alloys thereof. Of these, it is preferred that the metal includes at least one selected from iron and aluminum, and it is more preferred that the element constituting the metal is mainly iron or aluminum. The term "mainly" used herein means that the content thereof accounts for 90% by weight or more. Particularly, iron such as SS steel (rolled steel material for general structure), SPCC steel (cold-rolled steel material) or high tensile material (high tensile steel), stainless steel such as SUS304 or 316, aluminum of #1000 to #700, and alloys thereof are preferably used. The shape of the metal to be joined is not particularly limited and can be appropriately selected in conformity with the joint member to be obtained.

The metal member may contain two kinds or more of metals and may be a member containing a metal at least on its surface, so that one having metal plating on the surface thereof may be used. The shape is also not limited to only a flat-plate shape so long as a surface necessary for joining to the thermoplastic carbon fiber composite material is

secured, and any optional shape can be used. For example, a metal member having a cross-section of L-shape, T-shape, H-shape, U-shape and V-shape may be used, and a cylindrical metal member may be used. Furthermore, a metal member having a curved surface may be used.

In the invention, as the metal to be subjected to joining, a metal member having an uneven shape formed on the surface before being treated with a solution containing a specific triazine thiol derivative in the step (i) may be also used. The depth of the unevenness is preferably from 0.02 mm to 0.6 mm, particularly preferably from 0.05 mm to 0.5 mm. The unevenness can be formed by a physical treatment such as laser irradiation, blasting, polishing, cutting, or filing or a chemical treatment with a compound that erodes the metal surface. As the uneven shape, a grid-shaped one having an interval of 0.02 mm to 0.6 mm or a dent having a diameter of 0.02 to 0.6 mm as the concave portion of the uneven shape is preferred.

In the case where the unevenness is formed by laser irradiation, the laser beam spot diameter of a 20W model is focused to from 0.02 mmϕ to 0.6 mmϕ and thus a groove having a depth of 0.02 to 0.6 mm can be formed in a grid shape at a distance between laser spot centers of 0.02 mm to 0.6 mm intervals. In this case, the groove width is more preferably from 0.05 to 0.5 mm.

In the laser treatment, it is particularly preferred to irradiate a surface of the metal with a laser light having a wavelength of 300 nm to 1,100 nm at an intensity of 50 W/mm$^2$ or more. By adopting such irradiation conditions of the laser light, the uneven shape can be uniformly formed with suppressing a decrease in metal strength. The depth and width of the above groove is controllable by selecting the conditions for the laser treatment.

Here, as usable laser, various ones such as solid laser, liquid laser, gas laser, semiconductor laser, and chemical laser can be applied. Examples of the solid laser include YAG (yttrium-aluminum-garnet) laser and sapphire laser and examples of the gas laser include carbon dioxide laser and helium neon laser.

As blasting, there may be mentioned grit blasting, sand blasting, shot blasting, wet blasting, and the like, and sand blasting is preferred. In the case of forming the unevenness by blasting, a blasting material having a particle size (diameter) of 40 μm to 2,000 μm is used and a dent that may be regarded as a sphere having a diameter (ϕ) of 0.02 mm to 0.6 mm and a depth of 0.02 mm to 0.6 mm can be formed. As the blasting material, dry ice or the like can be also used besides the material made of a metal or ceramic.

The unevenness formed on the metal surface to be a joining portion may be arranged regularly or irregularly. However, for obtaining higher joining strength, it is preferred to arrange the uneven portion such that the total area of the portion accounts for 10% or more of the surface area of the metal at the joining portion. The depth, shape, size, and the like of each uneven portion formed on the surface of the metal are not necessarily all the same and variously shaped unevenness may be mixed. Meanwhile, the depth of the unevenness formed herein refers to, in the case where only a concave portion such as a groove or dent is formed on a flat metal surface, a depth of the groove or dent down to the deepest part of the groove or dent measured on the basis of the flat surface and, in the case where a concave portion and a convex portion are formed on the metal surface, the depth refers to a depth down to the deepest part of the concave portion measured on the basis of a horizontal plane containing the most protruded part of the convex portion. In the measurement, for the metal surface on which the unevenness is formed, 10 places of a region with 1 cm square are chosen at random, the depth is measured for all the uneven portions present in each region, and an average value thereof is taken as a depth of the unevenness.

In the invention, by using a metal having an uneven shape formed on the surface beforehand, a joint body in which a metal and a thermoplastic resin layer are more strongly closely attached can be obtained. Namely, since the molten thermoplastic resin in the thermoplastic resin layer comes into contact with the uneven portion on the metal surface by heating at the time of joining and is particularly penetrated into the concave portion and solidified, it is considered that the joining strength with the metal is increased by a so-called anchor effect. Moreover, since the thermoplastic resin at least on the surface (contact surface) of the thermoplastic carbon fiber composite material on the joining portion is also melted by the heating and melting at the time of joining, it comes into close contact with the resin of the above thermoplastic resin layer, as well. By compression-bonding the whole of the joining portion through pressurization of the above metal and the thermoplastic carbon fiber composite material simultaneously with the heating, the metal and the thermoplastic carbon fiber composite material are sufficiently closely attached through the molten thermoplastic resin layer. After the heating is finished, upon cooling, the thermoplastic resin layer is solidified and the whole of the metal and the thermoplastic carbon fiber composite material is integrated. It is presumed that the pressurization at the time of joining contributes the improvement of the joining strength because the pressurization facilitates the penetration of a part of the carbon fiber in the thermoplastic carbon fiber composite material into the concave portion.

Moreover, in the invention, the metal can be formed as a plate-shaped one having a surface pierced between both sides thereof, so-called a mesh-shaped one.

As the mesh form, there may be, for example, mentioned woven goods, knitted fabrics, or punching metals, and the like, and it is preferable to select properties such as the yarn diameter and the number of mesh appropriately in conformity with a joint member to be obtained. Specifically, the yarn diameter of the woven good and the knitted fabric is preferably from 0.02 mm to 1 mm, more preferably from 0.1 mm to 0.5 mm, and most preferably from 0.15 to 0.4 mm.

The mesh number is represented by the number of meshes per one square inch and is preferably from 100 to 100,000, more preferably from 323 to 65,000 or less, and most preferably from 645 to 32,000. When the number is less than 100, an area receiving a load is small and the joining strength tends to decrease. When the number is more than 100,000, the flow path of the air is blocked at the time of joining and becomes voids, so that a decrease in strength tends to be caused. Moreover, aperture of the metal mesh is more than 0% and preferable 66% or less. Here, the aperture is represented as follows: Aperture = $100*\{(25.4/(\text{number of mesh})^{1/2} - \text{yarn diameter})/(25.4/(\text{number of mesh})^{1/2})\}^2$. When the aperture is 66% or less, the joining strength does not exceed the strength of the metal mesh even in the case of a metal mesh having low strength, such as aluminum one, so that the metal mesh is difficultly fractured.

Furthermore, in the case of punching metals, since the flow path of the air tends to be blocked to generate voids at the time of joining, suitable aperture is lower as compared with the woven goods and the knitted fabrics and thus it is preferable that the aperture is 66% or less and the mesh number is 200 or more, it is more preferable that the aperture is 50% or less and the mesh number is 64 or more, and it is most preferable that the aperture is 33% or less and the mesh number is 25 or more.

In the invention, as the metal, one thermally treated beforehand may be also used. The joining strength is further enhanced by the thermal treatment in many cases. The conditions for the thermal treatment in this case are preferably a temperature of 250 to 500°C and a time of 10 seconds to 10 minutes.

[Step (i): Treatment of Metal Surface with Triazine Thiol Derivative Solution]

The method for manufacturing a joint member of the invention includes a step (i) of treating a surface of the metal to be joined to the thermoplastic carbon fiber composite material with a solution containing a specific triazine thiol derivative. The metal surface portion to be treated is not necessarily the entire surface of the joining portion to be finally joined to the thermoplastic carbon fiber composite material and may be a part thereof so long as the adhesiveness can be secured.

As the triazine thiol derivative, a compound represented by the following general formula (1), which is expectable to achieve chemical bonding with the metal, is used.

General formula (1)

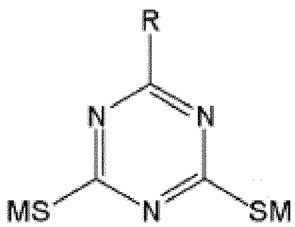

In the above general formula (1), R is -OR1, -OOR1, -SmR1, or NR1R2 where R1 and R2 are each independently H, a hydroxyl group, a carbonyl group, an ether group, an ester group, an amide group, an amino group, a phenyl group, an alkyl group having 1 to 10 carbon atoms, an alkynyl group having 2 to 10 carbon atoms, an alkenyl group, or a cycloalkyl group having 6 to 10 carbon atoms, and m means 1 or 2; M is H, Na, Li, K, Ba, Ca, or ammonium, and two M groups in the general formula (1) may be the same or different from each other.

A specific example of the compound represented by the above general formula (1) is preferably at least one organic compound selected from 6-diallylamino-2,4-dithiol-1,3,5-triazine, monosodium 6-methoxy-2,4-dithiol-1,3,5-triazine, monosodium 6-propyl-2,4-dithiolamino-1,3,5-triazine, and 2,4,6-trithiol-1,3,5-triazine.

The concentration of the triazine thiol derivative in the above solution with which the metal surface is treated is desirably in the range of 0.0001 to 30% by weight. More preferred concentration range is from 0.001 to 10% by weight. A particularly preferable lower limit value of the concentration is 0.01% by weight and a particularly preferable upper limit value thereof is 5% by weight. By controlling the concentration to the range, an enhancement of the joining strength can be thoroughly achieved.

As a method of the treatment with the solution containing the triazine thiol derivative, for example, there may be mentioned a method of dipping the metal in water, an organic solvent, or a mixture thereof in which the triazine thiol derivative is contained or dissolved and subsequently drying, a method of applying water or an organic solvent containing the triazine thiol derivative to the metal surface and subsequently drying, or a similar method. Moreover, there can be also used a method of treating the surface of the metal by an electrochemical method using an electrolytic solution in which water, an organic solvent, or a mixture thereof containing the triazine thiol derivative is used as a solvent. The

dipping time in the case of subjecting the metal to dipping treatment is preferably from about 10 seconds to 10 minutes. After dipping, the solvent can be also vaporized by air-drying. By these treatments, an extremely thin coating layer of a polyfunctional triazine thiol derivative is formed on the surface of the metal.

In the invention, the metal treated with the solution containing the triazine thiol derivative as mentioned above is preferably heat-treated after the treatment. The heat treatment is preferably conducted prior to the step (ii) of providing a thermoplastic resin layer. The heat treatment is suitable for enhancing the adhesiveness to the metal treated with the solution containing the triazine thiol derivative but, when the treatment is conducted excessively, there is a possibility of decomposing the coating layer derived from the triazine thiol derivative formed on the metal surface treated with the solution containing the triazine thiol derivative. The temperature for the heat treatment is preferably from 150°C to 350°C, more preferably from 170°C to 330°C, and further preferably from 200°C to 300°C. The time for the heat treatment is preferably from 1 minute to 20 minutes, more preferably from 3 to 15 minutes, and further preferably from 5 minutes to 10 minutes.

The presence of the compound derived from the triazine thiol derivative on the metal surface treated with the solution containing the triazine thiol derivative can be confirmed by means of a reflective IR spectroscope or the like.

<Metal Compound Coating layer>

In the invention, before the treatment with the solution containing a specific triazine thiol derivative in the step (i), it is preferable to treat the surface of the metal with at least one kind of a treating agent capable of forming a metal compound coating layer to form the metal compound coating layer.

As the compound capable of forming such a metal compound coating layer, in the case where the metal is iron or an iron alloy, there may be, for example, mentioned at least one selected from the group consisting of a hydroxide, a carboxylate, a phosphate, a sulfate, a thiosulfate, a chloride and a perchlorate. In the case of aluminum or an alloy thereof, there may be, for example, mentioned at least one selected from the group consisting of a hydroxide, a hydrated oxide, ammonia, an ammonium, hydrazine, a hydrazine derivative, a carboxylic acid, a carboxylate, phosphoric acid, a phosphate, a carbonate, a silicate, and a fluoride.

Of these, a phosphate is preferable in the case where the metal is iron or an iron alloy, and particularly, iron phosphate, zinc phosphate, or zirconium phosphate is preferably used. Moreover, in the case of aluminum or an alloy thereof, a hydroxide, an ammonium, hydrazine, or a hydrazine derivative is preferably used.

Thereby, a metal compound layer such as a hydroxide, a carboxylate, a phosphate, or a sulfate is formed between the triazine thiol derivative-containing layer and the metal, and thus further enhancement of the joining strength can be expected, so that the case is preferable. As methods for forming the metal compound layer, there may be, for example, preferably mentioned methods described in WO2009/157445, WO2009/078382, and the like. Specifically, there may be mentioned a method of dipping a metal in an acid such as hydrochloric acid, sulfuric acid, or phosphoric acid or a method of applying such an acid on the surface of the metal and subsequently drying, prior to the formation of the triazine thiol derivative-containing layer on the surface of the metal to be joined.

[Step (ii): Formation of Thermoplastic Resin Layer]

In the invention, at the joining of a metal and a thermoplastic carbon fiber composite material, a thermoplastic resin layer is provided between the thermoplastic carbon fiber composite material and the metal surface treated with the solution containing a specific triazine thiol derivative in the step (i). In the step (iii) mentioned later of the invention, the metal and the thermoplastic carbon fiber composite material are joined by melting the thermoplastic resin layer. Surprisingly, the metal surface treated with the triazine thiol derivative is very strongly closely attached to the thermoplastic resin layer and the joining strength of finally obtained joint member becomes extremely excellent. The thermoplastic resin layer is not necessarily provided on the entire surface of the metal to be joined and may be provided on a part thereof so long as the adhesiveness can be secured.

The above thermoplastic resin layer is preferably arranged in a form such as a film, a sheet, a non-woven fabric, a woven fabric and a powder on the metal surface. The thermoplastic resin constituting the thermoplastic resin layer is preferably a resin that is compatible with the matrix resin of the thermoplastic carbon fiber composite material, and there may be preferably mentioned a resin similar to the matrix resin constituting the thermoplastic carbon fiber composite material. More preferably, the thermoplastic resin constituting the thermoplastic resin layer and the thermoplastic resin constituting the thermoplastic carbon fiber composite material are the same kind of resins from the viewpoint of joining strength.

The thermoplastic resin constituting the thermoplastic resin layer includes polyamide, polycarbonate, polyoxymethylene, polyphenylene sulfide, polyphenylene ether, modified polyphenylene ether, polyethylene terephthalate, polybutylene terephthalate, polyethylene naphthalate, polyethylene, polypropylene, polystyrene, polymethyl methacrylate, AS resin, ABS resin, and the like, similarly to the matrix resin of the thermoplastic carbon fiber composite material.

Particularly, from the balance between costs and physical properties, at least one selected from the group consisting of polyamide, polypropylene, polycarbonate and polyphenylene sulfide is preferred. Moreover, as the polyamide constituting the thermoplastic resin layer, particularly preferred are polyamides the same as those exemplified as the matrix resins of the thermoplastic carbon fiber composite material.

These thermoplastic resins may contain additives such as a stabilizing agent, a flame retardant, a pigment and a filler, according to the need.

The thickness of the thermoplastic resin layer should be from 5 μm to 5 mm. Preferably, the thickness is from 20 μm to 4 mm, and more preferably from 40 μm to 3 mm. When the thickness of the thermoplastic resin layer is less than 5 μm, the thermoplastic resin layer necessary for welding is deficient and thus sufficient strength cannot be obtained in some cases. When the thickness of the thermoplastic resin layer exceeds 5 mm, moment acts on the joining surface when shear load is applied to one or both of the metal and the thermoplastic carbon fiber composite material, and strength may be decreased as a whole. By providing the thermoplastic resin layer in a thickness of 5 μm or more, sufficient resin can be supplied at the welding, and the carbon fiber can be prevented from coming into contact with the metal, so that prevention of electrolytic corrosion can be expected.

Here, in the case where the thermoplastic resin layer is substantially constituted by a film, a sheet, a non-woven fabric or the like, the thickness of the thermoplastic resin layer means a thickness before melting thereof. If a plurality of them is layered, it means a total thickness after layering.

The joining surface between the thermoplastic carbon fiber composite material and the metal is not limited to a flat surface, and may be a curved surface or an uneven surface. In the invention, since a flexible thermoplastic resin is placed between both joining surfaces and is melted under heating, the joining can be performed without problem even when a gap is somewhat present between the thermoplastic carbon fiber composite material and the metal surface.

The thermoplastic resin layer is not necessarily provided on the entire surface of the metal having the triazine thiol derivative-containing layer to be joined and the entire surface of the thermoplastic carbon fiber composite material to be joined and may be provided on a part thereof so long as the adhesiveness can be secured. The thermoplastic resin layer is arranged on the joining portion in a form such as a film, a sheet, a non-woven fabric, a woven or knitted fabric and/or a powder, and heat and pressure are applied in the next step (iii) to be mentioned later to melt the thermoplastic resin such a degree that a surface layer part of the thermoplastic carbon fiber composite material can be impregnated with the resin, and thereby it has a function of finally joining the metal and the thermoplastic carbon fiber composite material.

In the step (ii), there may be also adopted a method of forming a homogeneous thermoplastic resin layer on at least one of the surface of the metal and the surface of the thermoplastic carbon fiber composite material, preferably the surface of the metal, by: heating and melting the film, sheet, non-woven fabric, woven or knitted fabric and/or powder to be the thermoplastic resin layer in a state of coming into contact with the surface beforehand; and then cooling to solidify. The temperature in the step of forming the thermoplastic resin layer on the surface of the metal or the thermoplastic carbon fiber composite material to be joined is preferably in the range of (the melting temperature of the thermoplastic resin + 15°C) or more and (the decomposition temperature thereof - 30°C) or less, more preferably in the temperature range of (the melting temperature of the thermoplastic resin + 20°C) or more and (the decomposition temperature thereof - 20°C) or less. For example, in the case where the thermoplastic resin is PA6 (melting point: 220°C), preferable temperature is from 235 to 300°C. Meanwhile, the "melting temperature" used herein is a melting point of the resin constituting the thermoplastic resin layer and is a temperature that develops sufficient flowability when a melting point does not exist. In the case where the thermoplastic resin layer is formed by bringing the above film, sheet, non-woven fabric, or the like into contact with the surface of the metal and heating and melting it, preferably used is a method of layering the film, sheet, non-woven fabric, and the like on the metal heated to the above temperature beforehand and fusing them, a method of heating the metal to fuse the layer after layering the thermoplastic resin layer on the metal, or a similar method. In this case, when the surface temperature of the metal is less than the above range, there is a case where the resin is difficult to adapt to the surface and, when the temperature exceeds the above range, decomposition of the thermoplastic resin proceeds. Furthermore, the time for maintaining such temperature is preferably as short as possible so long as a time for essentially joining the thermoplastic carbon fiber composite material to the metal can be secured and, for example, the time is preferably from about 10 seconds to 10 minutes.

As a suitable method for forming the thermoplastic resin layer on the metal surface, there is adopted a method of forming the thermoplastic resin layer on the metal surface by: layering one sheet or plural sheet of the film, sheet, or non-woven fabric constituted by a thermoplastic resin on the metal surface; heating it in the state to melt and weld it on the metal surface; and then stopping the heating and cooling it to solidify the thermoplastic resin layer on the metal surface. Moreover, the thermoplastic resin layer can be also formed by directly supplying the thermally molten thermoplastic resin onto the metal surface and, for example, the layer may be arranged by thinly attaching the molten resin by injection molding.

In the step (ii) of the invention, a laminate in which the thermoplastic resin layer is fused on the metal surface treated with a triazine thiol derivative is preferably arranged such that the thermoplastic resin layer comes into contact

with the carbon fiber composite material.

The surface temperature of the metal at the time of welding the thermoplastic resin layer on the metal surface is preferably (the melting temperature of the thermoplastic resin + 15°C) or more and (the decomposition temperature thereof - 30°C) as mentioned above. When the temperature of the metal is equal to or less than the range, there is a case where the thermoplastic resin is difficult to adapt to the surface of the metal and, when the temperature exceeds the above range, the decomposition of the thermoplastic resin may proceed. Furthermore, the time for maintaining such temperature is preferably as short as possible so long as a time for essentially joining the thermoplastic carbon fiber composite material to the metal can be secured and, for example, the time is suitably from about 10 seconds to 10 minutes. For the joining strength between the thermoplastic resin layer and the metal, affinity to the metal surface treated with the solution containing the triazine thiol derivative is important, and there is a concern that the treated portion is generally degraded by high temperature. For this reason, the time for the treatment at high temperature is preferably short. As one example, the joining time at 275°C is preferably about 10 minutes or less.

Moreover, the joint body can be also manufactured all at once by interposing one layer or multilayer of the thermoplastic resin layer having a form such as a film, a sheet or a non-woven fabric between the surface of the metal member having the triazine thiol derivative-containing layer and the thermoplastic carbon fiber composite material and thermocompression-bonding the whole by heating and pressuring it at a temperature of (melting temperature of thermoplastic resin + 15°C) or more and (decomposition temperature of thermoplastic resin - 30°C). In the case of stacking a plurality of thermoplastic resin layers, the layers including different kinds of thermoplastic resins can be used in combination.

In the case where the thermoplastic resin layer is substantially formed from a non-woven fabric constituted by a thermoplastic resin, it is preferable to join the metal surface and the thermoplastic carbon fiber composite material by placing a non-woven fabric containing a thermoplastic resin between the thermoplastic carbon fiber composite material and the metal treated with the solution containing a specific triazine thiol derivative and melting the thermoplastic resin constituting the non-woven fabric. As the non-woven fabric used here, there is used one substantially constituted by a thermoplastic resin that melts by heating and can be fused to the metal surface treated with the triazine thiol derivative. As the thermoplastic resin, of the thermoplastic resins mentioned above, preferred are, for example, nylon (hot-melt polyamide), polycarbonate, polyethylene terephthalate, polybutylene terephthalate, polyethylene naphthalate, polyethylene, polypropylene, and the like. Of these, nylon and polypropylene are more preferred from the balance between costs and physical properties. As the nylon (sometimes abbreviated as PA), particularly preferred are PA6, PA66, copolymers including those as main components, and a blend of those. These non-woven fabric-constituting resins may contain additives such as a stabilizing agent, a flame retardant, a pigment, a filler, and the like, according to the need.

A fiber constituting the non-woven fabric may be a continuous and/or discontinuous fiber but a fiber that is easy to melt by heating is preferred. From this standpoint, a fiber that is subjected to neither stretching nor heat treatment is appropriate. When a non-woven fabric containing the same kind of resin (polymer) as the thermoplastic resin that is a matrix of the thermoplastic carbon fiber composite material is used as a non-woven fabric, the resin constituting the non-woven fabric is compatible with the matrix resin of the thermoplastic carbon fiber composite material upon heating and melting as described hereinafter, and the whole resin layer becomes completely unified homogeneously, so that the case is preferable.

Non-woven fabrics manufactured by any method of a dry process such as an air raid method or a needle punch method and a wet process such as a paper-making method can be used as a non-woven fabric. However, use of a non-woven fabric made by a spun-bond method (including a melt-blow method, but not limited to this) using a continuous fiber excellent in costs, productivity and meltability is particularly preferred.

As a non-woven fabric, only one sheet of a non-woven fabric may be used or a stacked body of a plurality of sheets of non-woven fabrics may be used. In the case of the latter, it is also possible to stack different kinds of non-woven fabrics in combination.

This non-woven fabric is preferably provided over the entire surface on which the thermoplastic carbon fiber composite material and the metal member are to be joined. However, in the case where necessary strength for joining (adhesiveness) can be secured, the non-woven fabric may locally be provided. Furthermore, the non-woven fabric can contain an appropriate amount of water, a plasticizer or the like for the purpose of making the non-woven fabric melt easily by heating, according to the need.

It is preferable that the non-woven fabric in the present invention has a total fiber areal weight of 10 to 500 $g/m^2$ and a total bulk density of 0.01 to 0.8 $g/cm^3$. The non-woven fabric having the fiber areal weight and total bulk density falling within the above ranges has both appropriate air permeability and elasticity in the thickness direction thereof. Therefore, when the thermoplastic carbon fiber composite material and the metal member are layered so that the non-woven fabric is intervened there between and pressurized under heating, the non-woven fabric is melted under almost uniform pressure. Accordingly, permeation into the surface of the thermoplastic carbon fiber composite material and/or fine unevenness present on the metal surface becomes easy and, as a result, joining area can be secured. Thereby, it becomes possible to enhance joining strength. Furthermore, the non-woven fabric has appropriate flexibility as compared

with a film, and therefore even in the case where the joining surface is a curved surface, a follow-up property to a shape becomes easy. As a result, material setting at the time of molding is easy, and it becomes possible to enhance the joining strength at a target site. Accordingly, an extremely excellent joining state can be achieved by using the non-woven fabric as mentioned above.

The "total fiber areal weight" and "total bulk density" used herein mean a fiber areal weight and a bulk density of the whole non-woven fabric, respectively. When the thermoplastic resin layer is constituted by one sheet of a non-woven fabric, those are the fiber areal weight and bulk density of the non-woven fabric, and in the case where a plurality of non-woven fabrics are stacked to constitute the thermoplastic resin layer, those are the sum of fiber areal weights and the sum of bulk densities of the individual non-woven fabrics stacked.

The thickness of non-woven fabric layer is suitably from 5 μm to 5 mm, preferably 20 μm to 4 mm, and particularly preferably 40 μm to 3 mm. By providing a non-woven fabric layer having a thickness of 5 μm or more, a sufficient resin can be supplied to the interface between the metal surface and the thermoplastic carbon fiber composite material at the time of thermal fusing, and the reinforcing fiber can be prevented from coming into contact with the metal. However, when the thickness of the resin layer exceeds 5 mm, moment acts on a joining surface when shear load is applied to one or both of the metal member and the thermoplastic carbon fiber composite material, and strength may be decreased as a whole. Meanwhile, the thickness of the non-woven fabric layer means a value measured by the method in accordance to the method of JIS-L-1913 (2010).

According to the invention, the adhesiveness between the metal surface treated with the solution containing the specific triazine thiol derivative and the thermoplastic resin layer is enhanced. Since the triazine thiol derivative represented by the above general formula (I) has chemical affinity to both of the metal and the thermoplastic resin, it is surmised that the adhesion strength between the metal and the thermoplastic resin layer can be increased. Furthermore, in the invention, it is surmised that voids are difficultly generated between the metal and the thermoplastic carbon fiber composite material by using the thermoplastic resin layer having the specific thickness and thus a joint member having excellent joining strength can be obtained.

[Step (iii): Joining by Welding]

In the invention, in the aforementioned step (ii), by melting the thermoplastic resin layer provided between the metal surface treated with the solution containing the triazine thiol derivative and the thermoplastic carbon fiber composite material, the metal and the thermoplastic carbon fiber composite material are joined. Surprisingly, the metal surface treated with the triazine thiol derivative is very strongly closely attached to the thermoplastic resin layer and thus the joining strength of the joint member finally obtained becomes extremely excellent.

The joining surface between the thermoplastic carbon fiber composite material and the metal is not limited to a flat surface, and may be a curved surface or an uneven surface. In the invention, since a non-woven fabric made of a flexible thermoplastic resin layer is intervened on both the joining surfaces and the layer is melted, the joining can be performed without problem even when a gap is somewhat present between the thermoplastic carbon fiber composite material and the metal to be joined.

Thus, according to the method for manufacturing a joint member of the invention, the metal and the thermoplastic carbon fiber composite material can be strongly joined by providing the thermoplastic resin layer between the metal treated with the solution containing the triazine thiol derivative and the thermoplastic carbon fiber composite material (preferably providing the thermoplastic resin layer beforehand on the metal surface treated with the solution containing the triazine thiol derivative) and conducting the step (iii) of melting the thermoplastic resin layer by heating.

The heating method for melting the thermoplastic resin layer in the above step (iii) is preferably heat transfer, radiation, and the like by an external heater. Furthermore, the method of heating a metal to be joined by electromagnetic induction is extremely preferable for the reason that a joining surface to the thermoplastic resin layer can be directly heated. The timing of heating the metal is preferably a time which is simultaneous with the molding of the heated thermoplastic resin, for achieving the highest welding strength. However, on the process, after molding, the metal can be heated and re-pressurized to thereby be joined.

The heating temperature on this occasion is preferably a melting temperature of the thermoplastic resin constituting the thermoplastic resin layer or more and the decomposition temperature thereof or less, and more preferably (the melting temperature + 15°C) or more and (the decomposition temperature - 30°C). For example, in the case where the above thermoplastic resins are all PA-6, the temperature is suitably from 235 to 300°C.

The molten thermoplastic resin layer can afford a joint body having better strength by bringing it into contact with the thermoplastic carbon fiber composite material, followed by compression-bonding.

Namely, in the invention, a joint member can be obtained by joining a thermoplastic carbon fiber composite material containing a thermoplastic resin as a matrix and a metal is provided by conducting a step (iv) of compression-bonding the thermoplastic resin layer and the thermoplastic carbon fiber composite material simultaneously with the above step (iii) or continuously after the step (iii).

As the pressurizing conditions at the time of compression-bonding, a pressure of preferably from 0.01 MPa to 2 MPa, more preferably from 0.02 MPa to 1.5 MPa, and still more preferably from 0.05 MPa to 1 MPa, is applied to the welding surface. When the pressure is 0.01 MPa or more, good joining strength is easily obtained, the shape is easily maintained because the thermoplastic carbon fiber composite material is difficult to cause springs back during heating, and material strength is enhanced, so that the case is preferred. When the pressure is 2 MPa or less, a pressurized part is difficult to be crushed, thereby the shape is easily maintained, and material strength is enhanced, so that the case is preferred.

At the time of performing the method of the invention, for example, there is recommended a method of forming the thermoplastic resin layer by firstly heating and welding a film, a sheet, a non-woven fabric, or the like of the thermoplastic resin on the surface of the metal subjected to the treatment with the triazine thiol and further compression-bonding, and subsequently layering the thermoplastic resin layer and the thermoplastic carbon fiber composite material and heating the joining portion of the both to melt the thermoplastic resin layer, and thereby strongly joining them, i.e., a method of conducting the steps (i) to (iii) in this order. However, there may be adopted a method of forming the thermoplastic resin layer on the metal surface treated with the triazine thiol derivative and almost simultaneously performing the joining to the thermoplastic carbon fiber composite material, after the step (i) is conducted, i.e., a method of conducting the steps (ii) and (iii) as one step. As specific examples of the latter, for example, a method of directly supplying a molten film of the thermoplastic resin between the metal surface and the thermoplastic carbon fiber composite material by casting, injection, or other method and then compression-bonding all the layers may be mentioned. Furthermore, the steps (ii) to (iv) can be conducted in one step after the step (i) is conducted. Also, when the joining and molding are conducted simultaneously, molding time can be shortened and a joint member molded into a desired shape can be efficiently produced.

[Joint Member]

In the case of a thermosetting carbon fiber composite material containing a thermosetting resin as a matrix, when it is intended to join the material to a metal, it has been forced to use of an adhesive or the molding over a long period of time in an autoclave after inserting the metal into a prepreg.

Since the invention uses the thermoplastic carbon fiber composite material containing a thermoplastic resin as a matrix, a molded body having a desired shape can be manufactured by press molding or the like. Therefore, joining of the thermoplastic carbon fiber composite material to a metal can be conducted simultaneously with such molding or continuously. That is, the invention includes a method for manufacturing a metal composite molded body in which a thermoplastic carbon fiber composite material and a metal are joined all at once by conducting the joining and molding simultaneously in a mold.

According to the invention, as mentioned above, the joining of the metal and the thermoplastic carbon fiber composite material and the molding can be conducted simultaneously or continuously and it becomes possible to conduct the molding and joining in manufacturing the joint member for a short period of time. Therefore, the method of the present invention is an industrially advantageous method as compared with the case of using a conventional carbon fiber composite material containing a thermosetting resin as a matrix.

According to the invention mentioned above, there is obtained a joint member in which a metal member and a thermoplastic carbon fiber composite material are strongly joined through a specific triazine thiol derivative-treated layer and a thermoplastic resin layer without using an adhesive or metal fittings for fastening. Also, a molded article in which a metal and a thermoplastic carbon fiber composite material are joined can be obtained by conducting the joining and molding simultaneously.

With regard to one embodiment of the joint member obtained by the invention, a schematic cross-sectional view is shown in Figure 1. In Figure 1, 1 is a thermoplastic carbon fiber composite material, 2 is a thermoplastic resin layer, 3 is a metal surface portion treated with a solution containing a triazine thiol derivative, and 4 is a metal itself.

The joining strength of the joint member can be evaluated by a tensile test. The joining strength of the joint member according to the invention is usually 5 MPa or more. Namely, in the joint member obtained by the manufacturing method of the invention, a carbon fiber composite material containing a thermoplastic resin as a matrix and a metal are joined through a thermoplastic resin layer and a triazine thiol derivative layer, and the joining strength thereof is preferably 5 MPa or more. In the case where they are joined under particularly preferable conditions, a joining strength of more than 8 MPa can be achieved.

The joint member obtained by the invention can be suitably used as a structural member requiring strength. Examples of the structural member include parts constituting moving vehicles such as automobiles, bicycles, railroad vehicles, aircraft, and ships, and structural materials of building and furniture, materials for sporting goods, and the like.

The number of a joining site in the joint member is not limited, and can be optionally selected depending on single lap or double lap, and depending on joining environment. In the case of the double lap, the area becomes two times, and therefore, the joining strength also becomes two times.

Examples

The present invention is specifically described below on the basis of Examples, but the invention is not limited to those.

Also, methods for measuring joining strength and for analyzing a fiber bundle of a random mat material are as follows.

1) Joining strength

Five sheets of a thermoplastic carbon fiber composite material-metal member joint body (joint member) as described in each example or the like were prepared. For each sheet, a value of tensile strength was determined by conducting a tensile test under a tension rate of 1 mm/minute by a universal tester "INSTRON (registered trademark) 5587", and an average value thereof was taken as a value of joining strength of the joint body.

2) Analysis of Fiber Bundle of Random Mat Material

The analysis of a fiber bundle in the random mat material obtained by Reference Example 3 was carried out in accordance with the method described in WO2012/105080.

Reference Example 1

Manufacturing of Thermoplastic Carbon Fiber Composite Material (A) of Layering Material in which Continuous Fibers are Alternatively Layered at 0° and 90°

Strands of carbon fiber ("TENAX" (registered trademark) STS40-24KS (fiber diameter: 7 μm, tensile strength: 4,000 MPa) manufactured by Toho Tenax Co., Ltd.) and nylon 6 films ("EMBLEM" (registered trademark) ON, 25 μm thick, manufactured by Unitika Ltd.) were sequentially layered to 64 layers (carbon fiber: 64 layers, nylon film: 65 layers) such that layers having a fiber direction of 0° and layers having a fiber direction of 90° were arranged alternately, and the resulting assembly was compressed under heating at a temperature of 260°C under a pressure of 2 MPa for 20 minutes. Thus, a thermoplastic carbon fiber composite material having 0° and 90° alternate fibers, symmetric layering, a carbon fiber volume fraction (Vf) of 47% (content of carbon fiber on the basis of mass: 57%) and a thickness of 2 mm was prepared. The content of the thermoplastic resin in the thermoplastic carbon fiber composite material was 75 parts by weight based on 100 parts by weight of the carbon fiber.

Reference Example 2

Manufacturing of Thermoplastic Carbon Fiber Composite Material (B) Using Random Mat Material

Carbon fiber ("TENAX" (registered trademark) STS40, average fiber diameter: 7 μm, manufactured by Toho Tenax Co., Ltd.) cut into an average fiber length of 16 mm was oriented randomly in a plane such that an average fiber areal weight becomes 540 g/$m^2$ and the resulting ones were sandwiched between 10 sheets of nylon 6 cloth (KE 435-POG cloth manufactured by Unitika Ltd.) and then pressed at a temperature of 260°C under a pressure of 2.5 MPa to prepare a flat-plate thermoplastic carbon fiber composite material having a size of 1,400 mm*700 mm and a thickness of 2 mm. The content of the thermoplastic resin in the thermoplastic carbon fiber composite material was 360 parts by weight based on 100 parts by weight of the carbon fiber.

Reference Example 3

Manufacturing of Thermoplastic Carbon Fiber Composite Material (C) Using Random Mat Material

Carbon fiber "TENAX" (registered trademark) STS40-24KS (average fiber diameter: 7 μm, strand width: 10 mm) manufactured by Toho Tenax Co., Ltd. were used. The carbon fiber was slit into a strand width of 0.8 mm using a vertical slit apparatus, and then cut into a given fiber length using a rotary cutter having a spiral knife arranged on the surface. The strands passing through the rotary cutter were introduced into a flexible transport pipe arranged just below the rotary cutter, and subsequently introduced into a fiber opening apparatus (air spray nozzle) arranged at the lower end of the transport pipe. As the fiber opening device, using a double pipe, small holes were provided on an inner pipe of the double pipe and compressed air was supplied between the inner pipe and the outer pipe thereof by a compressor. On this occasion, wind velocity from the small holes was 450 m/sec. A tapered pipe in which a diameter is increased

toward the lower side was welded to the lower end of the double pipe such that the cut carbon fibers move to the lower side together with the air flow in the tapered pipe. A matrix resin was supplied into the tapered pipe from the holes provided on the side surface of the pipe. As the matrix resin, particles of nylon 6 resin "A1030", manufactured by Unitika Ltd., were used. A breathable support (hereinafter referred to as a "fixing net") that moves in a certain direction was arranged at a lower side of the outlet of the tapered pipe. Suction was conducted from the lower part of the support by a blower, and while reciprocating the flexible transport pipe and the tapered pipe in a width direction of the fixing net moving in a constant rate, a mixture of the cut carbon fibers and the nylon resin particles discharged together with the air flow from the tip of the tapered pipe was deposited on the fixing net in a band shape. On this occasion, the amount of the carbon fiber supplied was set to 212 g/min, the amount of the matrix resin supplied was set to 320 g/min. When the apparatus was operated, a two-dimensionally isotropic random mat in which the carbon fiber and the thermoplastic resin were mixed without unevenness was formed on the fixing net. The fiber areal weight of carbon fiber of the random mat was 265 g/$m^2$. When the ratio of the carbon fiber bundle (A) and the average number (N) of fibers were investigated for the obtained random mat, critical number of single fiber defined by the above formula (a) was 86 and the ratio of the carbon fiber bundle (A) to the total amount of the fibers in the mat and the average number (N) of the single fibers (average number of fibers) were as shown in the following Table 1.

Four sheets of the random mat were layered, placed in a mold, and press-molded at a temperature of 300°C under a pressure of 1.0 MPa for a heating time of 3 minutes to obtain a plate-shaped thermoplastic carbon fiber composite material (C) having a thickness of 2.0 mm. The content of the thermoplastic resin in the thermoplastic carbon fiber composite material was 150 parts by weight based on 100 parts by weight of the carbon fiber. As a result of measuring tensile modulus in 0° and 90° directions of the resulting thermoplastic carbon fiber composite material (C), the ratio ($E\delta$) of tensile modulus was 1.03, fiber alignment was hardly observed, and a molded plate in which isotropy was maintained was obtained. Furthermore, the molded plate was heated at 500°C for about 1 hour in a furnace to remove the resin, and then the ratio of the carbon fiber bundle (A) contained and the average number (N) of fibers were investigated. As a result, any difference from the measurement results of the above random mat was not observed.

Reference Example 4

Metal Surface Treatment with Triazine Derivative

After a metal sheet having a length of 100 mm, a width of 25 mm and a thickness of 1.6 mm was degreased with acetone and dried, the sheet was dipped in a 10% aqueous sulfuric acid solution at about 70°C for about 30 seconds to activate the surface, followed by washing with water and drying. Then, the metal sheet was dipped in a solution, in which 0.4% by weight of 2,4,6-trithiol-1,3,5-triazine compound was added to a decaline solvent, at about 170°C for 5 minutes. Thereafter, the sheet was taken out and dipped in decaline at ordinary temperature to conduct cooling. Furthermore, the metal sheet was sufficiently washed with acetone to remove excess decaline and then dried at about 40°C.

Example 1

Both surfaces of an SPCC sheet (cold-rolled steel sheet) having a length of 100 mm, a width of 25 mm and a thickness of 1.6 mm were subjected to metal surface treatment by the method of Reference Example 4. Two sheets of a nylon 6 film ("EMBLEM" (registered trademark) ON, 25 $\mu$m thick, melting point: 225°C, manufactured by Unitika Ltd.) were placed on each of the both surfaces that are joining portions to a thermoplastic carbon fiber composite material. Thereafter, the SPCC sheet was heated to 250°C by electromagnetic induction heating, and then immediately cooled to ordinary temperature. The arranged nylon film was melted and closely attached to the metal surface and then solidified by cooling to form a nylon 6 layer having a thickness of 50 $\mu$m on the SPCC surfaces.

Then, the thermoplastic carbon fiber composite material (A) obtained in Reference Example 1 was cut into a length of 100 mm and a width of 25 mm and layered on the nylon 6 layer formed on the SPCC sheet surface in a range of 25 mm*25 mm by single lap. The resulting one was pressurized under heating at a temperature of 250°C under a pressure of 0.2 MPa for 5 minutes using a mold to melt the nylon 6 layer, and thereby the thermoplastic carbon fiber composite material and the SPCC sheet are adhered to prepare a joint member. Five sheets of the joint member were prepared, and each of them was subjected to the tensile test. As a result, an average value of joining strength was 8 MPa.

Example 2

Both surfaces of a 590 MPa class high tensile material having a length of 100 mm, a width of 25 mm and a thickness of 1.6 mm were subjected to metal surface treatment in the same manner as in Reference Example 4 except that a decaline solution of 0.4% by weight of 6-diallylamino-2,4-dithiol-1,3,5-triazine was used in place of 2,4,6-trithiol-1,3,5-triazine compound used in Reference Example 4. Twenty sheets of a nylon 6 film ("EMBLEM" (registered trademark)

ON, 25 μm thick, manufactured by Unitika Ltd.) were provided on each of the both surfaces of the above material. Then, the high tensile material was heated up to 250°C by electromagnetic induction heating, and then immediately cooled to ordinary temperature. The nylon 6 film was melted and closely attached, and then solidified to form a nylon 6 layer having a thickness of 500 μm on the surfaces of the high tensile material.

The flat plate-shaped thermoplastic carbon fiber composite material (B) obtained in Reference Example 2 was cut into a length of 100 mm and a width of 25 mm, layered on the nylon 6 layer formed on the high tensile material surface in a range of 25 mm*25 mm by single lap, the thermoplastic carbon fiber composite material was heated at 250°C, and the high tensile material was heated to 140°C, followed by pressurizing under heating under a pressure of 0.2 MPa for 1 minute using a mold. Subsequently, the high tensile material in the lapped material was heated up to a temperature of 250°C by electromagnetic induction heating to melt the nylon 6 layer and simultaneously pressurized under heating under a pressure of 0.2 MPa for 1 minute to prepare a joint member of the thermoplastic carbon fiber composite material and the high tensile material. Five sheets of the joint member were prepared, and each of the sheets of the joint member was subjected to the tensile test. As a result, an average value of joining strength was 9 MPa.

Example 3

A joint member of the thermoplastic carbon fiber composite material and SPCC was prepared through the same steps as in Example 1, except that heat treatment was conducted at 275°C for 10 minutes after the metal surface treatment was conducted by the method of Reference Example 4. Five sheets of the joint member were prepared, and each of them was subjected to the tensile test. As a result, an average value of joining strength was 12 MPa.

Example 4

A nylon 6 layer having a thickness of 50 μm was formed in the same manner as in Example 1, except that a 5052 aluminum sheet having a thickness of 1 mm, which was subjected to the surface treatment by the method of Reference Example 4, was used in place of the SPCC sheet. The flat plate-shaped thermoplastic carbon fiber composite material (B) obtained in Reference Example 2 was cut into a length of 100 mm and a width of 25 mm, and layered on the aluminum sheet having the nylon layer in a range of 25 mm*25 mm by single lap, followed by pressurizing under heating at a temperature of 250°C under a pressure of 0.2 MPa for 5 minutes using a mold to melt the nylon 6 layer, and thereby a joint member of the thermoplastic carbon fiber composite material and the 5052 aluminum sheet was prepared. Five sheets of the joint member were prepared, and each of the sheets of the joint member was subjected to the tensile test. As a result, the aluminum sheet part was fractured. Calculating from fracture strength of the aluminum sheet, it was realized that the joining strength was 7.1 MPa or more.

Example 5

After both surfaces of an SPCC sheet having a length of 100 mm, a width of 25 mm and a thickness of 1.6 mm were subjected to metal surface treatment by the method of Reference Example 4, heat treatment was conducted at 275°C for 10 minutes. The flat plate-shaped thermoplastic carbon fiber composite material (B) obtained in Reference Example 2 was cut into a length of 100 mm and a width of 25 mm, and the thermoplastic carbon fiber composite material and the SPCC sheet were layered in a range of 25 mm*25 mm by single lap. Between them, two sheets of a nylon 6 film ("EMBLEM" (registered trademark) ON, 25 μm thick, melting point: 225°C, manufactured by Unitika Ltd.) were sandwiched, followed by pressurizing under heating at a temperature of 250°C under a pressure of 0.2 MPa for 5 minutes using a mold to adhere the thermoplastic carbon fiber composite material and the SPCC sheet, and thereby preparing a joint member. Five sheets of the joint member were prepared, and each of the sheets of the joint member was subjected to the tensile test. As a result, an average value of joining strength was 12 MPa.

Example 6

After an SPCC sheet (cold-rolled steel sheet) having a length of 100 mm, a width of 25 mm and a thickness of 1.6 mm was degreased with acetone and dried, a grid-shaped groove having a laser spot center interval of 0.08 mm and a depth of 0.08 mm was formed on the entire surface of the metal sheet to be joined, using YAG laser (continuous wave) having an oscillation wavelength of 1.064 μm, a maximum rated output of 20 W, and a beam spot of 130μ m

The metal subjected to the laser processing was subjected to the surface treatment by the method of Reference Example 4. Two sheets of a nylon 6 film ("EMBLEM" (registered trademark) ON, 25 μm thick, melting point: 225°C, manufactured by Unitika Ltd.) were layered on the metal surface thus treated. Then, the nylon 6 film and the SPCC sheet surface were heated to 250°C by electromagnetic induction heating, and then immediately cooled to ordinary temperature. The nylon 6 film was melted and closely attached to the SPCC sheet surface and then solidified to form a

nylon 6 resin layer having a thickness of 50 μm on the SPCC sheet surface.

The flat plate-shaped thermoplastic carbon fiber composite material (B) obtained in Reference Example 2 was cut into a length of 100 mm and a width of 25 mm, and layered on the SPCC sheet having the nylon 6 resin layer on the surface in a range of 25 mm*25 mm by single lap, followed by pressurizing under heating at 250°C under 0.2 MPa for 5 minutes using a mold to melt the nylon 6 resin layer, thereby preparing a joint member of the thermoplastic carbon fiber composite material and the SPCC sheet. Five sheets of the joint member were prepared, and each of the sheets of the joint member was subjected to the tensile test. As a result, an average value of joining strength was 13 MPa.

Example 7

An SPCC sheet having a length of 100 mm, a width of 25 mm and a thickness of 1.6 mm, which was subjected to surface treatment according to Reference Example 4, was heated up to 240°C, and then two sheets of the nylon 6 non-woven fabric prepared by a melt-blow method were layered on the upper surface of the SPCC sheet.

The non-woven fabric was manufactured by a melt-blow method using a Nylon 6 resin "NOVAMID" (registered trademark) 1010C2 manufactured by DMS Japan Engineering Plastics Corporation as a raw material. In the melt-blow method, a non-woven fabric was formed by discharging a molten polymer from a plurality of aligned orifice dies, injecting a high speed gas from an injection gas port provided adjacent to the orifice dies to form the discharged molten polymer into fine fibers, and then collecting the fiber flow on a conveyor net that is a collector. The nylon 6 non-woven fabric obtained had an average fiber diameter of 5 μm, an average fiber areal weight per one sheet of the non-woven fabric of 20 $g/m^2$, an average bulk density of 0.1 $g/cm^3$, and an average thickness of 0.2 mm.

The thermoplastic carbon fiber composite material (B) obtained in Reference Example 2 was cut into a length of 100 mm and a width of 25 mm, and was subjected to drying treatment at 80°C for 5 hours. The thermoplastic carbon fiber composite material was layered in a range of 25 mm*25 mm by single lap such that the nylon 6 non-woven fabric was arranged between the thermoplastic carbon fiber composite material and the SPCC, and the resulting assembly was pressurized under heating under conditions of a temperature of 240°C and a pressure of 0.5 MPa for 1 minute by a press molding machine to melt the nylon non-woven fabric, and thereby a joint body of the thermoplastic carbon fiber composite material and the SPCC sheet was prepared. Five sheets of the joint member were prepared, and a tensile test for each sheet was conducted and the joining strength measured (average value of 5 sheets) was 10 MPa.

Example 8

Five sheets each of joint members of a metal (SPCC sheet) and a thermoplastic carbon fiber composite material were prepared by performing the same operations as in Example 6, except that a flat (non-uneven) SPCC sheet having a length of 100 mm, a width of 25 mm and a thickness of 1.6 mm subjected to surface treatment according to Reference Example 4 was used as a metal sheet and two kinds of thermoplastic carbon fiber composite materials (C) having different constitution of the carbon fiber bundle and carbon fiber volume fraction, which was obtained by the method of Reference Example 3, were used as the thermoplastic carbon fiber composite material. A tensile test for each joint member obtained was conducted and, as a result, the joining strength (average value of 5 sheets) thereof was as shown in Table 1.

[Table 1]

| | Measurement Item | Example 8 |
|---|---|---|
| Random mat material | Average fiber length (mm) | 25 |
| | Critical number of single fiber | 86 |
| | Ratio of carbon fiber bundle (A) (Vol%) | 30 |
| | Average number (N) of fibers | 250 |
| Carbon fiber composite material (C) | Carbon fiber volume fraction (Vol%) | 40 |
| | Thickness (mm) | 2.0 |
| Joint body with metal sheet | Average value of joining strength (MPa) | 13 |

Industrial Applicability

According to the present invention, a thermoplastic carbon fiber composite material and a metal can be joined strongly and stably by a simplified method. Furthermore, since the carbon fiber composite material and the metal are

joined through a thermoplastic resin, electrolytic corrosion caused by carbon fiber can be prevented at the same time. Moreover, a joint member of the thermoplastic carbon fiber composite material and the metal can be obtained for a short period of time in less number of steps by conducting the joining and molding simultaneously or continuously. Additionally, the triazine thiol derivatives used in the invention are relatively inexpensive and easily available, so that there is an advantage that they can be industrially advantageously used.

Moreover, the joining and molding can be also conducted simultaneously or continuously in the same mold. Therefore, when they are simultaneously performed, it becomes possible to manufacture a thermoplastic composite material-metal member joint body having a shape molded into a desired one in less number of steps for a short period of time.

While the invention has been described in detail and with reference to specific embodiments thereof, it will be apparent to one skilled in the art that various changes and modifications can be made therein without departing from the scope thereof.

Description of Reference Numerals and Signs

1. Thermoplastic carbon fiber composite material
2. Thermoplastic resin layer
3. Metal surface portion
4. Metal

**Claims**

**1.** A method for manufacturing a joint member in which a carbon fiber composite material containing a thermoplastic resin as a matrix and a metal are joined, the method comprising:

a step (i) of treating a surface of the metal to be joined to the carbon fiber composite material with a solution containing a triazine thiol derivative represented by the following general formula (1);
a step (ii) of providing a thermoplastic resin layer having a thickness of 5 μm to 5 mm between the surface of the metal treated with the solution containing the triazine thiol derivative and the carbon fiber composite material; and
a step (iii) of melting the thermoplastic resin layer by heating to combine the metal and the carbon fiber composite material into one-piece:

General formula (1)

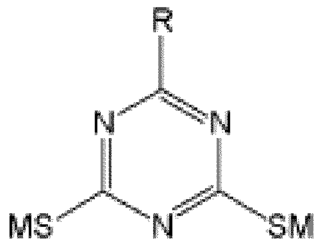

wherein, in the general formula (1),
R is -OR1, -OOR1, -SmR1, or NR1R2 where R1 and R2 are each independently H, a hydroxyl group, a carbonyl group, an ether group, an ester group, an amide group, an amino group, a phenyl group, an alkyl group having 1 to 10 carbon atoms, an alkynyl group having 2 to 10 carbon atoms, an alkenyl group, or a cycloalkyl group having 6 to 10 carbon atoms, m means 1 or 2; and
M is H, Na, Li, K, Ba, Ca, or ammonium, and two M groups in the general formula (1) may be the same or different from each other.

**2.** The method for manufacturing a joint member according to claim 1,
wherein the triazine thiol derivative is at least one organic compound selected from the group consisting of 6-diallylamino-2,4-dithiol-1,3,5-triazine, monosodium 6-methoxy-2,4-dithiol-1,3,5-triazine, monosodium 6-propyl-2,4-dithiolamino-1,3,5-triazine, and 2,4,6-trithiol-1,3,5-triazine.

**3.** The method for manufacturing a joint member according to claim 1,
wherein a concentration of the triazine thiol derivative in the solution containing the triazine thiol derivative is in a range of 0.001 to 10% by weight.

**4.** The method for manufacturing a joint member according to claim 1,
wherein a treatment of forming a metal compound coating layer on the surface of the metal is conducted before the treatment with the solution containing the triazine thiol derivative.

**5.** The method for manufacturing a joint member according to claim 1,
wherein the metal treated with the solution containing the triazine thiol derivative is heat-treated before providing the thermoplastic resin layer.

**6.** The method for manufacturing a joint member according to claim 1,
wherein, in the step (ii), a laminate obtained by fusing the thermoplastic resin layer to the surface of the metal treated with the triazine thiol derivative is arranged such that the thermoplastic resin layer comes into contact with the carbon fiber composite material.

**7.** The method for manufacturing a joint member according to claim 1,
wherein the thermoplastic resin layer is melted by heating the metal in the step (iii).

**8.** The method for manufacturing a joint member according to claim 1,
wherein the step (ii) and the step (iii) are conducted in the same step.

**9.** The method for manufacturing a joint member according to claim 1, which comprises a step (iv) of compression-bonding the thermoplastic resin layer and the carbon fiber composite material simultaneously with the step (iii) or after the step (iii).

**10.** The method for manufacturing a joint member according to claim 1, which comprises a step of forming an uneven shape having a depth of 0.02 to 0.6 mm on the surface of the metal before the treatment with the solution containing the triazine thiol derivative.

**11.** The method for manufacturing a joint member according to claim 1,
wherein the resin substantially constituting the thermoplastic resin layer is the same kind of resin as the thermoplastic resin layer contained in the carbon fiber composite material as the matrix.

**12.** The method for manufacturing a joint member according to claim 1,
wherein the thermoplastic resin layer comprises one or a plurality of a thermoplastic resin film, sheet or non-woven fabric.

**13.** The method for manufacturing a joint member according to claim 1,
wherein a content of the thermoplastic resin in the carbon fiber composite material is from 50 to 1,000 parts by weight based on 100 parts by weight of carbon fibers.

**14.** The method for manufacturing a joint member according to claim 1,
wherein the carbon fiber composite material contains discontinuous carbon fibers having an average fiber length of 3 mm to 100 mm.

**15.** The method for manufacturing a joint member according to claim 14,
wherein the carbon fiber composite material substantially comprises an isotropic random mat containing the discontinuous carbon fibers and the thermoplastic resin,
the isotropic random mat contains a carbon fiber bundle (A) constituted by single fibers of the carbon fibers of a critical number of single fiber or more, the critical number of single fiber defined by the following formula (a) in a ratio of 20 Vol% or more and less than 99 Vol% relative to a total volume of the carbon fibers constituting the isotropic random mat, and
an average number (N) of fibers in the carbon fiber bundle (A) satisfies the following formula (b):

$$\text{Critical number of single fiber} = 600/D \quad (a)$$

$$0.7 * 10^4/D^2 < N < 1 * 10^5/D^2 \quad (b)$$

wherein D is an average fiber diameter (μm) of the single carbon fibers.

**16.** A joint member obtained by the method for manufacturing according to claim 1,
wherein the carbon fiber composite material containing the thermoplastic resin as a matrix and the metal are joined through the thermoplastic resin layer and the triazine thiol derivative layer, and
joining strength thereof is 5 MPa or more.

## Patentansprüche

**1.** Verfahren zur Herstellung eines gebondeten Elements, wobei ein Kohlefaserverbundmaterial, das ein thermoplastisches Harz als Matrix enthält, und ein Metall gebondet werden, wobei das Verfahren umfasst:

einen Schritt (i) der Behandlung einer Oberfläche des Metalls, das an das Kohlefaserverbundmaterial gebondet werden soll, mit einer Lösung, die ein Triazinthiolderivat enthält, das durch die folgende allgemeine Formel (1) wiedergegeben wird;
einen Schritt (ii) der Bereitstellung einer Schicht aus thermoplastischem Harz mit einer Dicke von 5 μm und 5 mm zwischen der Oberfläche des Metalls, das mit der Lösung behandelt wurde, die das Triazinthiolderivat enthält, und dem Kohlefaserverbundmaterial; und
einen Schritt (iii) des Schmelzens der thermoplastischen Harzschicht durch Erhitzen, um das Metall und das Kohlefaserverbundmaterial zu einem Stück zu kombinieren:

Allgemeine Formel (1)

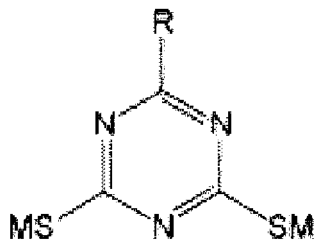

wobei in der allgemeinen Formel (1) R -OR1, -OOR1, -SmR1 oder NR1R2 ist, wobei R1 und R2 jeweils unabhängig H, eine Hydroxylgruppe, eine Carbonylgruppe, eine Ethergruppe, eine Estergruppe, eine Amidgruppe, eine Aminogruppe, eine Phenylgruppe, eine Alkylgruppe mit 1 bis 10 Kohlenstoffatomen, eine Alkinylgruppe mit 2 bis 10 Kohlenstoffatomen, eine Alkenylgruppe oder eine Cycloalkylgruppe mit 6 bis 10 Kohlenstoffatomen ist, m 1 oder 2 bedeutet; und
M H, Na, Li, K, Ba, Ca oder Ammonium ist und zwei M-Gruppen in der allgemeinen Formel (1) gleich oder voneinander verschieden sein können.

**2.** Verfahren zur Herstellung eines gebondeten Elements nach Anspruch 1, wobei das Triazinthiolderivat mindestens eine organische Verbindung ausgewählt aus der Gruppe bestehend aus 6-Diallylamino-2,4-dithiol-1,3,5-triazin, Mononatrium-6-methoxy-2,4-dithiol-1,3,5-triazin, Mononatrium-6-propyl-2,4-dithiolamino-1,3,5-triazin und 2,4,6-Trithiol-1,3,5-triazin ist.

**3.** Verfahren zur Herstellung eines gebondeten Elements nach Anspruch 1,
wobei eine Konzentration des Triazinthiolderivats in der Lösung, die das Triazinthiolderivat enthält, im Bereich von 0,001 bis 10 Gew.% liegt.

**4.** Verfahren zur Herstellung eines gebondeten Elements nach Anspruch 1,
wobei eine Behandlung zur Bildung einer Metallverbindungsbeschichtungsschicht auf der Oberfläche des Metalls vor der Behandlung mit der Lösung, die das Triazinthiolderivat enthält, durchgeführt wird.

**5.** Verfahren zur Herstellung eines gebondeten Elements nach Anspruch 1,
wobei das Metall, das mit der Lösung behandelt wird, die das Triazinthiolderivat enthält, hitzebehandelt wird, bevor die thermoplastische Harzschicht bereitgestellt wird.

**6.** Verfahren zur Herstellung eines gebondeten Elements nach Anspruch 1,
wobei in dem Schritt (ii) ein Laminat, das durch Schmelzen der Schicht aus thermoplastischem Harz an die Oberfläche des Metalls, das mit dem Triazinthiolderivat behandelt wurde, erhalten wurde, derart angeordnet wird, dass die Schicht aus thermoplastischem Harz in Kontakt mit dem Kohlefaserverbundmaterial kommt.

**7.** Verfahren zur Herstellung eines gebondeten Elements nach Anspruch 1,
wobei die Schicht aus thermoplastischem Harz geschmolzen wird, indem das Metall in Schritt (iii) erhitzt wird.

**8.** Verfahren zur Herstellung eines gebondeten Elements nach Anspruch 1,
wobei der Schritt (ii) und der Schritt (iii) in demselben Schritt durchgeführt werden.

**9.** Verfahren zur Herstellung eines gebondeten Elements nach Anspruch 1, das einen Schritt (iv) umfasst, in dem die Schicht aus thermoplastischem Harz und das Kohlefaserverbundmaterial gleichzeitig mit dem Schritt (iii) oder nach dem Schritt (iii) kompressionsgebondet werden.

**10.** Verfahren zur Herstellung eines gebondeten Elements nach Anspruch 1, das einen Schritt des Bildens einer unregelmäßigen Form mit einer Tiefe von 0,02 bis 0,6 mm auf der Oberfläche des Metalls vor der Behandlung mit der Lösung, die das Triazinthiolderivat enthält, umfasst.

**11.** Verfahren zur Herstellung eines gebondeten Elements nach Anspruch 1,
wobei das Harz, das im Wesentlichen die Schicht aus thermoplastischem Harz stellt, dieselbe Art von Harz wie die Schicht aus thermoplastischem Harz ist, die in dem Kohlefaserverbundmaterial als Matrix enthalten ist.

**12.** Verfahren zur Herstellung eines gebondeten Elements nach Anspruch 1,
wobei die Schicht aus thermoplastischem Harz eines oder eine Vielzahl von einem Film, einer Lage oder einem Vliesstoff aus thermoplastischem Harz umfasst.

**13.** Verfahren zur Herstellung eines gebondeten Elements nach Anspruch 1,
wobei ein Gehalt des thermoplastischen Harzes in dem Kohlefaserverbundmaterial 50 bis 1000 Gewichtsteile ist, bezogen auf 100 Gewichtsteile der Kohlefasern.

**14.** Verfahren zur Herstellung eines gebondeten Elements nach Anspruch 1,
wobei das Kohlefaserverbundmaterial diskontinuierliche Kohlefasern mit einer durchschnittlichen Faserlänge von 3 mm bis 100 mm enthält.

**15.** Verfahren zur Herstellung eines gebondeten Elements nach Anspruch 14,
wobei das Kohlefaserverbundmaterial im Wesentlichen eine isotrope regellose Matte umfasst, die die diskontinuierlichen Kohlefasern und das thermoplastische Harz umfasst,
die isotrope regellose Matte ein Kohlefaserbündel (A) enthält, das durch Einzelfasern der Kohlefasern von einer kritischen Anzahl von Einzelfasern oder mehr, wobei die kritische Anzahl von Einzelfasern durch die folgende Formel (a) definiert ist, in einem Verhältnis von 20 Vol.% oder mehr und weniger als 99 Vol.% gebildet ist, bezogen auf ein Gesamtvolumen der Kohlefasern, die die isotrope regellose Matte bilden, und
eine durchschnittliche Anzahl (N) an Fasern in dem Kohlefaserbündel (A) die folgende Formel (b) erfüllt:

$$\text{Kritische Anzahl von Einzelfasern} = 600/D \quad \text{(a)}$$

$$0{,}7*10^4/D^2<N<1*10^5/D^2 \qquad (b)$$

wobei D ein durchschnittlicher Faserdurchmesser (μm) der Einzelkohlefasern ist.

**16.** Gebondetes Element, das nach dem Verfahren zur Herstellung nach Anspruch 1 erhalten wird, wobei das Kohlefaserverbundmaterial, welches das thermoplastische Harz als Matrix enthält, und das Metall über die Schicht aus thermoplastischem Harz und die Triazinthiolderivatschicht gebondet sind, und
die Bondingfestigkeit davon 5 MPa oder mehr beträgt.

## Revendications

**1.** Procédé de fabrication d'un élément assemblé dans lequel un matériau composite à fibres de carbone contenant une résine thermoplastique comme matrice et un métal sont assemblés, le procédé comprenant :

une étape (i) de traitement d'une surface du métal à assembler au matériau composite à fibres de carbone avec une solution contenant un dérivé thiolé de triazine représenté par la formule générale (1) suivante ;
une étape (ii) d'obtention d'une couche de résine thermoplastique ayant une épaisseur de 5 μm à 5 mm entre la surface du métal traité avec la solution contenant le dérivé thiolé de triazine et le matériau composite à fibres de carbone ; et
une étape (iii) de fusion de la couche de résine thermoplastique par chauffage pour combiner le métal et le matériau composite à fibres de carbone en une seule pièce :

Formule générale (1)

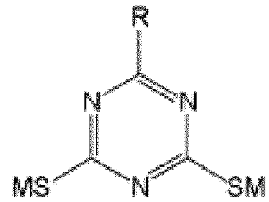

dans lequel, dans la formule générale (1),
R représente -OR1, -OOR1, -SmR1 ou NR1R2 où R1 et R2 représentent chacun indépendamment H, un groupe hydroxyle, un groupe carbonyle, un groupe éther, un groupe ester, un groupe amide, un groupe amino, un groupe phényle, un groupe alkyle ayant 1 à 10 atomes de carbone, un groupe alcynyle ayant 2 à 10 atomes de carbone, un groupe alcényle, ou un groupe cycloalkyle ayant 6 à 10 atomes de carbone, m désigne 1 ou 2 ; et
M représente H, Na, Li, K, Ba, Ca, ou l'ammonium, et deux groupes M dans la formule générale (1) peuvent être identiques ou différents l'un de l'autre.

**2.** Procédé de fabrication d'un élément assemblé selon la revendication 1,
dans lequel le dérivé thiolé de triazine est au moins un composé organique choisi dans le groupe constitué par la 6-diallylamino-2,4-dithiol-1,3,5-triazine, la 6-méthoxy-2,4-dithiol-1,3,5-triazine monosodique, la 6-propyl-2,4-dithiolamino-1,3,5-triazine monosodique, et la 2,4,6-trithiol-1,3,5-triazine.

**3.** Procédé de fabrication d'un élément assemblé selon la revendication 1,
dans lequel une concentration du dérivé thiolé de triazine dans la solution contenant le dérivé thiolé de triazine se situe dans une gamme de 0,001 à 10 % en poids.

**4.** Procédé de fabrication d'un élément assemblé selon la revendication 1,
dans lequel un traitement de formation d'une couche de revêtement de composé métallique sur la surface du métal est conduit avant le traitement avec la solution contenant le dérivé thiolé de triazine.

**5.** Procédé de fabrication d'un élément assemblé selon la revendication 1,
dans lequel le métal traité avec la solution contenant le dérivé thiolé de triazine est traité thermiquement avant d'obtenir la couche de résine thermoplastique.

**6.** Procédé de fabrication d'un élément assemblé selon la revendication 1,
dans lequel, à l'étape (ii), un stratifié obtenu en fusionnant la couche de résine thermoplastique à la surface du métal traité avec le dérivé thiolé de triazine est disposé de telle sorte que la couche de résine thermoplastique vient en contact avec le matériau composite à fibres de carbone.

**7.** Procédé de fabrication d'un élément assemblé selon la revendication 1,
dans lequel la couche de résine thermoplastique est fondue en chauffant le métal à l'étape (iii).

**8.** Procédé de fabrication d'un élément assemblé selon la revendication 1,
dans lequel l'étape (ii) et l'étape (iii) sont conduites dans la même étape.

**9.** Procédé de fabrication d'un élément assemblé selon la revendication 1, qui comprend une étape (iv) d'assemblage par compression de la couche de résine thermoplastique et du matériau composite à fibres de carbone simultanément à l'étape (iii) ou après l'étape (iii).

**10.** Procédé de fabrication d'un élément assemblé selon la revendication 1, qui comprend une étape de formation d' une forme irrégulière ayant une profondeur de 0,02 à 0,6 mm sur la surface du métal avant le traitement avec la solution contenant le dérivé thiolé de triazine.

**11.** Procédé de fabrication d'un élément assemblé selon la revendication 1,
dans lequel la résine constituant en grande partie la couche de résine thermoplastique est le même type de résine que la couche de résine thermoplastique contenue dans le matériau composite à fibres de carbone comme matrice.

**12.** Procédé de fabrication d'un élément assemblé selon la revendication 1,
dans lequel la couche de résine thermoplastique comprend un film, une feuille ou un non-tissé de résine thermoplastique, ou une pluralité d'entre eux.

**13.** Procédé de fabrication d'un élément assemblé selon la revendication 1,
dans lequel une teneur de la résine thermoplastique dans le matériau composite à fibres de carbone est de 50 à 1000 parties en poids, rapporté à 100 parties en poids de fibres de carbone.

**14.** Procédé de fabrication d'un élément assemblé selon la revendication 1,
dans lequel le matériau composite à fibres de carbone contient des fibres de carbone discontinues ayant une longueur de fibre moyenne de 3 mm à 100 mm.

**15.** Procédé de fabrication d'un élément assemblé selon la revendication 14,
dans lequel le matériau composite à fibres de carbone comprend essentiellement un mat aléatoire isotrope contenant les fibres de carbone discontinues et la résine thermoplastique,
le mat aléatoire isotrope contient un faisceau de fibres de carbone (A) constitué de fibres individuelles des fibres de carbone d'un nombre critique de fibre individuelle ou plus, le nombre critique de fibre individuelle étant défini par la formule (a) suivante dans une proportion de 20 % en volume ou plus et moins de 99 % en volume par rapport à un volume total des fibres de carbone constituant le mat aléatoire isotrope, et
un nombre moyen (N) de fibres dans le faisceau de fibres de carbone (A) satisfait la formule (b) suivante :

$$\text{Nombre critique de fibre individuelle} = 600/D \quad (a)$$

$$0{,}7*10^4/D^2 < N < 1*10^5/D^2 \quad (b)$$

dans lequel D est un diamètre de fibre moyen (μm) des fibres de carbone individuelles.

**16.** Élément assemblé obtenu par le procédé de fabrication selon la revendication 1,
dans lequel le matériau composite à fibres de carbone contenant la résine thermoplastique comme matrice et le métal sont assemblés par la couche de résine thermoplastique et la couche de dérivé thiolé de triazine, et
la résistance d'assemblage de celui-ci est de 5 MPa ou plus.

FIGURE 1

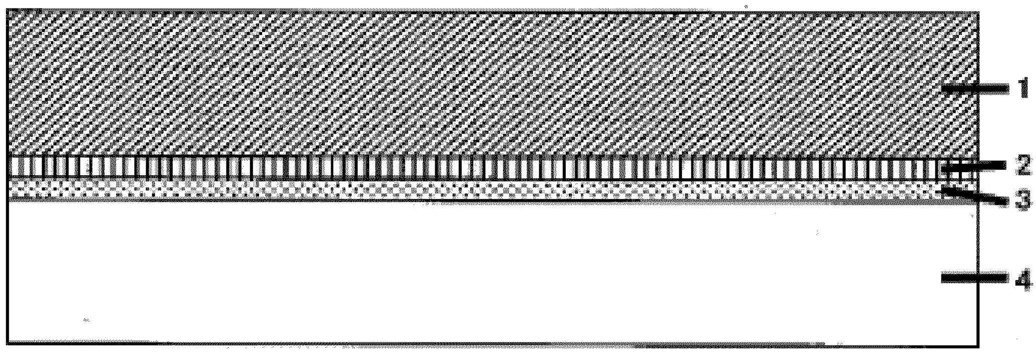

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003103563 A
- JP 5051671 B
- WO 2009078382 A
- JP 2006305838 A
- JP 2001001445 A
- JP 2006297927 A
- WO 2012105080 A
- JP 2013049208 A
- WO 2009157445 A